(19) Europäisches Patentamt
European Patent Office
Office européen des brevets

(11) EP 4 722 270 A1

(12) EUROPEAN PATENT APPLICATION
published in accordance with Art. 153(4) EPC

(43) Date of publication:
08.04.2026 Bulletin 2026/15

(21) Application number: 24815966.7

(22) Date of filing: 30.05.2024

(51) International Patent Classification (IPC):
*C08G 63/672* (2006.01) *C08G 63/78* (2006.01)

(52) Cooperative Patent Classification (CPC):
C08G 63/672; C08G 63/78

(86) International application number:
PCT/KR2024/095855

(87) International publication number:
WO 2024/248592 (05.12.2024 Gazette 2024/49)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 31.05.2023 KR 20230070474

(71) Applicant: SK Chemicals Co., Ltd.
Seongnam-si, Gyeonggi-do 13494 (KR)

(72) Inventors:
- YOO, Young-Man
Seongnam-si, Gyeonggi-do 13494 (KR)
- KANG, Jaesik
Seongnam-si, Gyeonggi-do 13494 (KR)
- HWANG, Eun-Yeong
Seongnam-si, Gyeonggi-do 13494 (KR)

(74) Representative: Dehns
10 Old Bailey
London EC4M 7NG (GB)

# (54) THERMOPLASTIC POLYESTER ELASTOMER RESIN AND PREPARATION METHOD THEREFOR

(57) The present invention relates to a thermoplastic polyester elastomer resin, a preparation method therefor, and an article comprising same. The thermoplastic polyester elastomer resin can have excellent elasticity and compression-elastic recovery while having high mechanical strength, elongation, etc. Accordingly, the thermoplastic polyester elastomer resin can be utilized in the manufacturing of various articles (e.g., fibers, foams, shoe parts, etc.).



Processed by Luminess, 75001 PARIS (FR)

## Description

### Technical Field

The present invention relates to a thermoplastic polyester elastomer resin comprising a hard segment with thermoplastic properties and a soft segment with elastomeric properties (PO3G and EO-PPG introduced) and having excellent physical properties such as mechanical strength, elasticity, and compression-elastic recovery, and to a process for preparing the same.

### Background Art

A thermoplastic elastomer (TPE) resin comprises a hard segment derived from a thermoplastic polymer having thermoplastic properties and a soft segment derived from an elastomer, a rubber-like material, having elastomeric properties. When compared with conventional thermosetting rubbers, a hard segment physically bonded by crystals is similar to chemical crosslinking called "vulcanization," and a soft segment is similar to amorphous rubber-like properties.

Thermoplastic polyester elastomer (TPEE) resins among TPE resins have high mechanical strength and excellent impact resistance, thermal resistance, flexibility, and moldability; thus, they are used in the preparation of automobile parts, electrical and electronic parts, fibers, and films.

A TPEE resin mainly comprises a crystalline hard segment of tetramethylene ester and an amorphous soft segment of polyether polyol ester. As a raw material for preparing a soft segment of a TPEE resin, polyethylene ether glycol (PEG), poly(1,2-propylene) glycol (PPG), ethylene oxide-adducted polypropylene glycol (EO-PPG), polytetramethylene ether glycol (PTMG), and the like have been used. However, TPEE resins prepared using PEG as a raw material have the disadvantage of having high moisture content, and PPG has low polymerization reactivity; thus, they are not often used as a raw material for preparing TPEE resins. Accordingly, PTMG, EO-PPG, or a combination thereof are mainly used to prepare a soft segment of TPEE resins.

TPEE resins prepared using PTMG as a raw material have good physical properties such as mechanical strength and elongation, whereas there is a limit to increasing physical properties such as elasticity and compression-elastic recovery at the desired level or more. In addition, TPEE resins prepared using EO-PPG as a raw material have high crystallinity, which leads to excellent moldability, whereas it is poor in physical properties such as mechanical strength and elongation.

Accordingly, there is a need to develop a novel TPEE resin that can be used in the preparation of various products as it has excellent physical properties such as mechanical strength and elongation, as well as high elasticity and compression-elastic recovery.

### Disclosure of Invention

### Technical Problem

In order to solve the conventional problems described above, the present inventors have conducted various studies. As a result, it has been discovered that a thermoplastic polyester elastomer (TPEE) resin having excellent mechanical strength and enhanced elasticity and compression-elastic recovery is obtained by increasing the incompatibility between the hard segment and the soft segment and controlling the crystallinity and crystallization rate of the soft segment to a low level.

Accordingly, an object of the present invention is to provide a thermoplastic polyester elastomer resin with excellent mechanical strength, along with excellent elasticity and compression-elastic recovery, and a process for preparing the same.

In addition, another object of the present invention is to provide a composition or an article comprising the thermoplastic polyester elastomer resin.

### Solution to Problem

In order to accomplish the above object, the present invention provides a thermoplastic polyester elastomer resin that comprises a repeat unit (a) represented by the following Formula 1; a repeat unit (b) represented by the following Formula 2; and a repeat unit (c) represented by the following Formula 3:

[Formula 1]

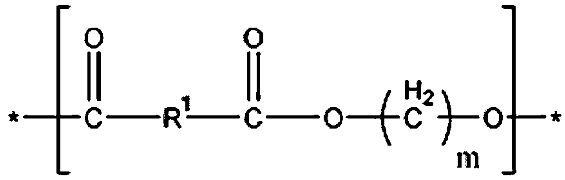

[Formula 2]

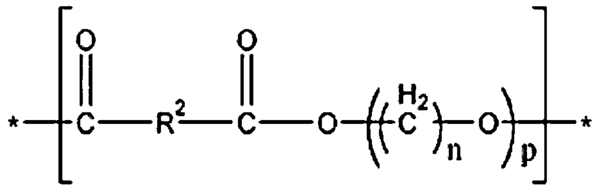

[Formula 3]

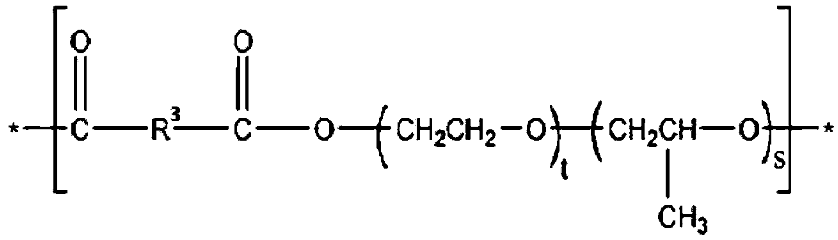

In Formulae 1 to 3, $R^1$ to $R^3$ are each independently a $C_1$ to $C_{12}$ linear, branched, or cyclic divalent aliphatic hydrocarbon group; or a $C_6$ to $C_{12}$ divalent aromatic hydrocarbon group, m is an integer of 2 to 6, n is an integer of 2 to 3, p is an integer of 10 to 30, t is an integer of 1 to 30, and s is an integer of 1 to 40.

In addition, the present invention provides a process for preparing a thermoplastic polyester elastomer resin that comprises (1-1) reacting a glycol component; a dicarboxylic acid component; and a high molecular weight glycol component to obtain a reactant; and (1-2) subjecting the reactant to a polycondensation reaction, wherein the thermoplastic polyester elastomer resin comprises a repeat unit (a) represented by the above Formula 1; a repeat unit (b) represented by the above Formula 2; and a repeat unit (c) represented by the above Formula 3.

In addition, the present invention provides a composition that comprises the thermoplastic polyester elastomer resin.

In addition, the present invention provides an article that comprises the thermoplastic polyester elastomer resin.

**Advantageous Effects of Invention**

In the thermoplastic polyester elastomer resin according to the present invention, polytrimethylene ether glycol (PO3G) is adopted in the preparation of its soft segment; thus, it can exhibit excellent mechanical strength. In addition, in the thermoplastic polyester elastomer resin according to the present invention, ethylene oxide-adducted polypropylene glycol (EO-PPG) is adopted in the preparation of its soft segment, in which a methylene side chain is attached to the polyol main chain, which restricts the movement of the polymer chains of the soft segment, creates sufficient free volume between the polymer chains, reduces crystallinity and crystallization rate, and increases incompatibility with the hard segment to expedite phase separation with the hard segment; thus, it can have excellent elasticity and compression-elastic recovery.

As described above, the thermoplastic polyester elastomer resin according to the present invention has excellent mechanical strength, elasticity, and compression-elastic recovery while exhibiting a desired level of hardness; thus, it can be used in the production of various products such as automobile parts, electrical and electronic parts, fibers, films, matrices, cushioning materials, foams, shoe parts, and the like.

## Best Mode for Carrying out the Invention

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element, and/or component, unless specifically stated to the contrary.

Throughout the present specification, the terms first, second, and the like are used to describe various components. But the components should not be limited by the terms. The terms are used for the purpose of distinguishing one element from another.

All numbers and expressions related to the quantities of components, reaction conditions, and the like used herein are to be understood as being modified by the term "about" unless otherwise indicated.

In a thermoplastic polyester elastomer (TPEE) resin, phase separation takes place due to incompatibility between the crystalline hard segment and the non-crystalline soft segment to form an elastomer matrix, thereby exhibiting rubber-like elastic properties. In order to increase the elastic properties of a thermoplastic polyester elastomer resin, it is required to control the boundary between the hard segment and the soft segment to be clear. Specifically, when the difference in crystallinity and non-crystallinity between the hard segment and the soft segment is increased to enhance incompatibility while the free volume of the polymer chain is enhanced, the phase separation can be achieved more clearly. That is, the hard segment needs to be crystallized as quickly as possible, and the soft segment needs to be induced to crystallize as late as possible. As a result, a thermoplastic polyester elastomer resin with high mechanical strength and excellent elastic properties can be obtained.

Based on the above, in the present invention, polytrimethylene ether glycol (PO3G) is adopted when a soft segment of a thermoplastic polyester elastomer resin is formed to lower the crystallinity and crystallization rate of the soft segment, and ethylene oxide-adducted polypropylene glycol (EO-PPG) is adopted to increase incompatibility with a hard segment, resulting in clear phase separation. This is explained in detail as follows.

## Thermoplastic polyester elastomer resin

The thermoplastic polyester elastomer resin according to the present invention comprises a repeat unit (a) represented by the following Formula 1; a repeat unit (b) represented by the following Formula 2; and a repeat unit (c) represented by the following Formula 3.

[Formula 1]

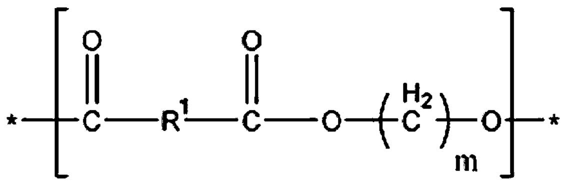

[Formula 2]

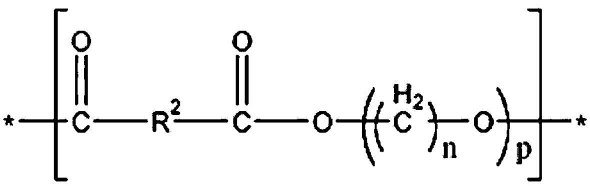

[Formula 3]

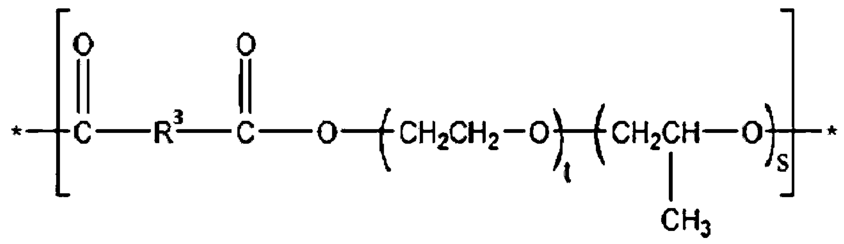

In Formulae 1 to 3, $R^1$ to $R^3$, which are the same as, or different from, each other, are each independently a $C_1$ to $C_{12}$ linear, branched, or cyclic divalent aliphatic hydrocarbon group; or a $C_6$ to $C_{12}$ divalent aromatic hydrocarbon group, m is an integer of 2 to 6, n is an integer of 2 to 3, p is an integer of 10 to 30, t is an integer of 1 to 30, and s is an integer of 1 to 40.

The repeat unit (a) represented by Formula 1 may be a repeat unit constituting a hard segment of the thermoplastic polyester elastomer resin. In Formula 1, $R^1$ may specifically be a $C_5$ to $C_{12}$ cyclic divalent aliphatic hydrocarbon group or a $C_6$ to $C_{12}$ divalent aromatic hydrocarbon group, and m may be an integer of 3 to 5. For example, $R^1$ may be a cyclohexylene group or a phenylene group, and m may be an integer of 4.

The repeat unit (b) represented by Formula 2 and the repeat unit (c) represented by Formula 3 may each be a repeat unit constituting a soft segment of the thermoplastic polyester elastomer resin. In Formula 2, $R^2$ may specifically be a $C_5$ to $C_{12}$ cyclic divalent aliphatic hydrocarbon group or a $C_6$ to $C_{12}$ divalent aromatic hydrocarbon group. In addition, n may be an integer of 2 or 3, and p may be an integer of 15 to 25. For example, $R^2$ may be a cyclohexylene group or a phenylene group, n may be an integer of 3, and p may be an integer of 18 to 22. In Formula 3, $R^3$ may specifically be a $C_5$ to $C_{12}$ cyclic divalent aliphatic hydrocarbon group or a $C_6$ to $C_{12}$ divalent aromatic hydrocarbon group. In addition, t may be an integer of 5 to 25, and s may be an integer of 5 to 35. For example, $R^3$ may be a cyclohexylene group or a phenylene group, t may be an integer of 10 to 20, and s may be an integer of 10 to 30.

For example, the thermoplastic polyester elastomer resin according to the present invention may comprise a repeat unit represented by the following Formula 4 and/or a repeat unit represented by the following Formula 5 as the repeat unit (a) represented by the above Formula 1, the repeat unit (b) represented by the above Formula 2, and the repeat unit (c) represented by the above Formula 3 are combined with each other.

[Formula 4]

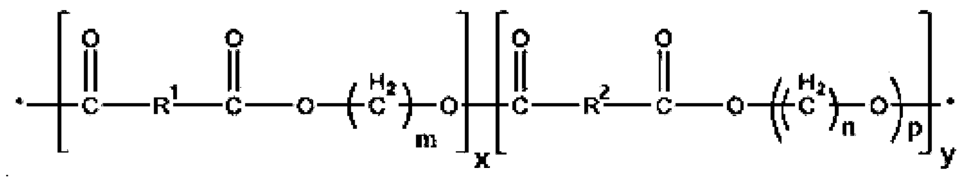

[Formula 5]

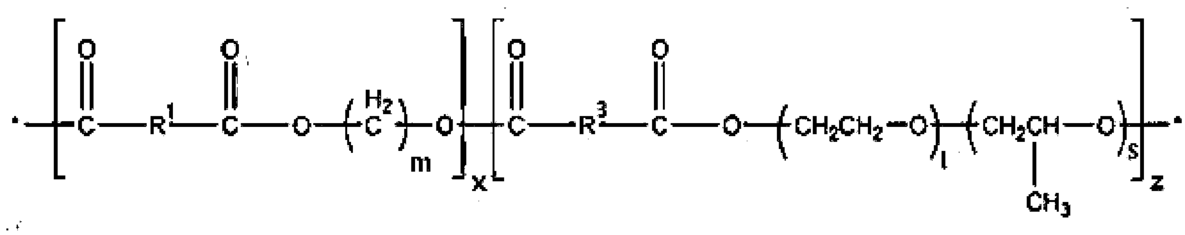

In Formulae 4 and 5, $R^1$, $R^2$, $R^3$, m, n, p, t, and s are the same as described above, and x, y, and z are weight ratios.

According to the present invention, the repeat unit (a) represented by Formula 1 may be derived from a reaction of a glycol component comprising 1,4-butanediol; and a dicarboxylic acid component, the repeat unit (b) represented by Formula 2 may be derived from a reaction of a dicarboxylic acid component; and a high molecular weight glycol component comprising polytrimethylene ether glycol (a first high molecular weight glycol component), and the repeat unit (c) represented by Formula 3 may be derived from a reaction of a dicarboxylic acid component; and a high molecular weight glycol component comprising ethylene oxide-adducted polypropylene glycol (second high molecular weight glycol component).

Specifically, the thermoplastic polyester elastomer resin according to the present invention may be a resin obtained by using a dicarboxylic acid component, a glycol component, and a high molecular weight glycol component (a first high molecular weight glycol component and a second high molecular weight glycol component) as reaction raw materials.

The dicarboxylic acid component (e.g., a dicarboxylic acid, its ester, chloride, or anhydride) may be an aliphatic dicarboxylic acid component, an aromatic dicarboxylic acid component, or a combination thereof.

The aliphatic dicarboxylic acid component may be a linear, branched, or cyclic aliphatic dicarboxylic acid component. The number of carbon atoms of the aliphatic dicarboxylic acid component may be 4 or more, 5 or more, 6 or more, or 7 or more, and may be 20 or less, 15 or less, 13 or less, 12 or less, or 10 or less. Specifically, the number of carbon atoms of the aliphatic dicarboxylic acid component may be 4 to 20, 5 to 15, or 6 to 10.

For example, the aliphatic dicarboxylic acid component may comprise at least one selected from the group consisting of adipic acid, sebacic acid, succinic acid, isodecylsuccinic acid, maleic acid, fumaric acid, glutaric acid, azelaic acid, 1,4-cyclohexanedicarboxylic acid, and 1,3-cyclohexanedicarboxylic acid, but it is not limited thereto.

The number of carbon atoms of the aromatic dicarboxylic acid component may be 6 or more, 7 or more, 8 or more, or 10 or more, and may be 25 or less, 20 or less, or 15 or less. Specifically, the number of carbon atoms of the aromatic dicarboxylic acid component may be 6 to 25, 6 to 15, or 6 to 10.

For example, the aromatic dicarboxylic acid component may comprise at least one selected from the group consisting of terephthalic acid, isophthalic acid, naphthalenedicarboxylic acid, diphenyl dicarboxylic acid, 4,4'-stilbendicarboxylic acid, 2,5-furandicarboxylic acid, 2,5-thiophenedicarboxylic acid, and dimethyl terephthalate, but it is not limited thereto.

Preferably, the dicarboxylic acid component may comprise at least one selected from the group consisting of terephthalic acid and dimethyl terephthalate. The amount (amount added during the reaction) of at least one (at least one component) selected from the group consisting of terephthalic acid and dimethyl terephthalate used is not particularly limited, but it may be 50% by mole or more, 65% by mole or more, 70% by mole or more, 85% by mole or more, 90% by mole or more, or 95% by mole or more, based on the total mole percent of the dicarboxylic acid component. Specifically, the amount of terephthalic acid, dimethyl terephthalate, or a combination thereof used may be 50 to 100% by mole, 55 to 100% by mole, 60 to 100% by mole, 70 to 100% by mole, 85 to 100% by mole, or 90 to 95% by mole.

The glycol component may be a component that is subjected to an esterification reaction or a transesterification reaction with the dicarboxylic acid component to form a hard segment of tetramethylene ester (e.g., repeat unit (a) of Formula 1). The number of carbon atoms of the glycol component may be 2 or more, 3 or more, or 4 or more, and may be 15 or less, 12 or less, 10 or less, or 8 or less. Specifically, the number of carbon atoms of the glycol component may be 2 to 15, 3 to 10, or 4 to 8.

For example, the glycol component may comprise at least one selected from the group consisting of ethylene glycol, 1,3-propanediol, 1,4-butanediol, 1,4-cyclohexanedimethanol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, polyethylene glycol, polypropylene glycol, polytetramethylene glycol, polyhexamethylene glycol, copolymers of ethylene oxide and tetrahydrofuran, polycarbonate diol, polyneopentyl glycol, poly-3-methylpentanediol, and poly-1,5-pentanediol. Specifically, the glycol component may comprise at least one selected from the group consisting of ethylene glycol, 1,3-propanediol, 1,4-butanediol, and 1,4-cyclohexanedimethanol.

Preferably, the glycol component may comprise 1,4-butanediol. The amount of 1,4-butanediol used (amount added during the reaction) is not particularly limited, but it may be 75% by mole or more, 80% by mole or more, 83% by mole or more, 85% by mole or more, 90% by mole or more, or 95% by mole or more, based on the total mole percent of the glycol component. Specifically, the amount of 1,4-butanediol used may be 75 to 100% by mole, 80 to 100% by mole, 83 to 100% by mole, 85 to 100% by mole, 90 to 100% by mole, or 90 to 95% by mole.

The number average molecular weight of the glycol component is not particularly limited, but it may be less than 400 g/mole, less than 350 g/mole, less than 300 g/mole, or less than 250 g/mole.

The high molecular weight glycol component may be a component that is subjected to an esterification reaction or a transesterification reaction with the dicarboxylic acid component to form a soft block of poly(alkylene oxide) ester (e.g., repeat (b) of Formula 2 and repeat unit (c) of Formula 3). The high molecular weight glycol component may comprise polytrimethylene ether glycol (PO3G) and ethylene oxide-adducted polypropylene glycol (EO-PPG). As the high molecular weight glycol component comprises polytrimethylene ether glycol (PO3G), the mechanical strength of the thermoplastic polyester elastomer resin can be significantly enhanced. In addition, as the high molecular weight glycol component comprises ethylene oxide-adducted polypropylene glycol (EO-PPG), the elasticity and compression-elastic recovery of the thermoplastic polyester elastomer resin can be significantly enhanced.

Preferably, the high molecular weight glycol component may be composed of polytrimethylene ether glycol (PO3G) and ethylene oxide-adducted polypropylene glycol (EO-PPG). The amount of polytrimethylene ether glycol (PO3G) used (amount added during the reaction) is not particularly limited, but it may be 50% by mole or more, 60% by

mole or more, 75% by mole or more, 85% by mole or more, 95% by mole or more, or 97% by mole or more, based on the total mole percent of the high molecular weight glycol component (total components of the first high molecular weight glycol component and the second high molecular weight glycol component). Specifically, the amount of polytrimethylene ether glycol (PO3G) used may be 50 to 99.5% by mole, 60 to 99% by mole, 65 to 95% by mole, 70 to 90% by mole, 75 to 90% by mole, or 75 to 85% by mole. In addition, the amount of ethylene oxide-adducted polypropylene glycol (EO-PPG) used (amount added during the reaction) is not particularly limited, but it may be 50% by mole or less, 40% by mole or less, 25% by mole or less, 15% by mole or less, 5% by mole or less, or 3% by mole or less, based on the total mole percent of the high molecular weight glycol component (total components of the first high molecular weight glycol component and the second high molecular weight glycol component). Specifically, the amount of ethylene oxide-adducted polypropylene glycol (EO-PPG) used may be 0.5 to 50% by mole, 1 to 40% by mole, 5 to 35% by mole, 10 to 30% by mole, 15 to 30% by mole, or 15 to 25% by mole.

The number average molecular weight of the high molecular weight glycol component comprising polytrimethylene ether glycol (PO3G) and ethylene oxide-adducted polypropylene glycol (EO-PPG) is not particularly limited, but it may be 400 g/mole or more, 500 g/mole or more, 600 g/mole or more, 700 g/mole or more, or 800 g/mole or more, and may be 6,000 g/mole or less, 5,000 g/mole or less, 4,000 g/mole or less, or 3,000 g/mole or less. Specifically, in order to ensure good phase separation from the hard segment, the number average molecular weight of the high molecular weight glycol component may be 400 to 5,000 g/mole or 1,000 to 3,000 g/mole.

For example, the number average molecular weight of polytrimethylene ether glycol (PO3G) may be 500 to 4,000 g/mole, 600 to 4,000 g/mole, 800 to 3,500 g/mole, or 1,000 to 3,000 g/mole. In addition, the number average molecular weight of ethylene oxide-adducted polypropylene glycol (EO-PPG) may be 1,000 to 4,000 g/mole, 1,500 to 3,500 g/mole, 2,000 to 3,500 g/mole, or 2,000 to 3,000 g/mole.

Meanwhile, according to the present invention, the content (x) of the repeat unit (a) represented by Formula 1 is not particularly limited, but it may be 20 to 70% by weight, 22 to 68% by weight, 24 to 65% by weight, 26 to 63% by weight, or 27 to 60% by weight, based on the total weight of the thermoplastic polyester elastomer resin. As the content (x) of the repeat unit (a) is within the above range, a thermoplastic polyester elastomer resin with mechanical strength (e.g., tensile strength) and hardness secured at desired levels can be provided.

In addition, the content (y) of the repeat unit (b) represented by Formula 2 is not particularly limited, but it may be 5 to 70% by weight, 7 to 65% by weight, 9 to 60% by weight, 12 to 55% by weight, or 20 to 50% by weight, based on the total weight of the thermoplastic polyester elastomer resin. As the content (y) of the repeat unit (b) is within the above range, a thermoplastic polyester elastomer resin with excellent mechanical strength and elongation, along with elasticity and compression-elastic recovery secured at desired levels, can be provided.

In addition, the content (z) of the repeat unit (c) represented by Formula 3 is not particularly limited, but it may be 0.5 to 40% by weight, 1 to 38% by weight, 5 to 35% by weight, 10 to 30% by weight, or 15 to 25% by weight, based on the total weight of the thermoplastic polyester elastomer resin. As the content (z) of the repeat unit (c) is within the above range, a thermoplastic polyester elastomer resin with excellent elasticity and compression-elastic recovery, along with mechanical strength and elongation secured at desired levels, can be provided.

The thermoplastic polyester elastomer resin according to the present invention may be a resin that comprises the repeat unit (a), the repeat unit (b), and the repeat unit (c), while the content ratio (weight ratio) between these repeat units is controlled to a specific range.

Specifically, the thermoplastic polyester elastomer resin according to the present invention may satisfy the following Relationship 1. As the thermoplastic polyester elastomer resin satisfies the following Relationship 1, it can have a desired high molecular weight, along with higher mechanical strength.

[Relationship 1]

$$0.5 \leq (y + z)/x \leq 3.0$$

In Relationship 1, x is the weight accounted for by the repeat unit (a) represented by Formula 1 in the thermoplastic polyester elastomer resin (total weight of thermoplastic polyester elastomer resin), y is the weight accounted for by the repeat unit (b) represented by Formula 2 in the thermoplastic polyester elastomer resin (total weight of thermoplastic polyester elastomer resin), and z is the weight accounted for by the repeat unit (c) represented by Formula 3 in the thermoplastic polyester elastomer resin (total weight of thermoplastic polyester elastomer resin).

Specifically, in Relationship 1, the ratio of $(y + z)/x$ may be 0.55 to 2.95, 0.6 to 2.85, 0.65 to 2.75, 0.7 to 2.65, 0.75 to 2.5, 0.9 to 2.5, 1 to 2.5, or 1.1 to 2.45.

In addition, the thermoplastic polyester elastomer resin according to the present invention may satisfy the following Relationship 2. As the thermoplastic polyester elastomer resin satisfies the following Relationship 2, it can have more excellent elasticity and compression-elastic recovery.

[Relationship 2]

$$0.3 \leq y/z \leq 35$$

In Relationship 2, y is the weight accounted for by the repeat unit (b) represented by Formula 2 in the thermoplastic polyester elastomer resin (total weight of thermoplastic polyester elastomer resin), and z is the weight accounted for by the repeat unit (c) represented by Formula 3 in the thermoplastic polyester elastomer resin (total weight of thermoplastic polyester elastomer resin).

Specifically, in Relationship 2, the ratio of y/z may be 0.4 to 30, 0.45 to 20, 0.5 to 15, 0.5 to 10, 0.8 to 8, 0.9 to 6, 1 to 5, or 1.2 to 4.

Meanwhile, the thermoplastic polyester elastomer resin according to the present invention may further comprise a repeat unit (d) derived from a reactive compatibilizer. As the thermoplastic polyester elastomer resin further comprises the repeat unit (d), it can have more enhanced elasticity and compression-elastic recovery, along with mechanical strength and elongation.

The reactive compatibilizer is an additive that prevents phase separation between the respective raw material components in a mixture of two or more raw materials (resin mixture) and helps improve miscibility by enabling the formation of a stable and long-term continuous phase. Specifically, the reactive compatibilizer is a reactive polymer that is compatible with one of the mixed raw material components and reacts with the functional group of the other raw material component. When it is added to the raw material mixture to carry out a reactive extrusion process, the formation of a block copolymer or a graft copolymer may be induced.

The reactive compatibilizer may be selected from the group consisting of isocyanate compounds, carbodiimide compounds (e.g., polycarbodiimide compounds having two or more of the -N=C=N- structure in the molecule), epoxy compounds, oxazoline compounds, compounds having a glycidyl group, and compounds having a maleic anhydride structure. Here, the isocyanate compound has too high reactivity with moisture; thus, it may be difficult to control reactivity and handling (storage) convenience. The carbodiimide compound is expensive; thus, economic feasibility may be low. In addition, the epoxy compound may have a large difference in reactivity depending on the epoxy equivalent weight and number of functional groups, making it difficult to control reactivity. The oxazoline compound is less reactive than other compounds; thus, it may be difficult to expect an effect of enhancing miscibility between raw material components. Thus, it may be preferable to use a compound having a glycidyl group or a maleic anhydride structure as a reactive compatibilizer.

The compound having a glycidyl group may specifically be a glycidyl group-modified olefin-based rubber polymer, preferably a polymer in which glycidyl (meth)acrylate is grafted onto a polyolefin-based rubber copolymer (glycidyl (meth)acrylate-grafted polyolefin elastomer). The compound having a maleic anhydride structure may specifically be a polymer in which maleic anhydride is grafted onto a polyolefin-based rubber copolymer (maleic anhydride-grafted polyolefin elastomer).

For example, the reactive compatibilizer may be poly(ethylene-co-methylacrylate-co-glycidyl methacrylate). As a result, the repeat unit (d) may have a structure represented by the following Formula 6. In addition, the reactive compatibilizer may be poly(ethylene-co-ethylacrylate-co-maleic anhydride). As a result, the repeat unit (d) may be represented by the following Formula 7.

[Formula 6]

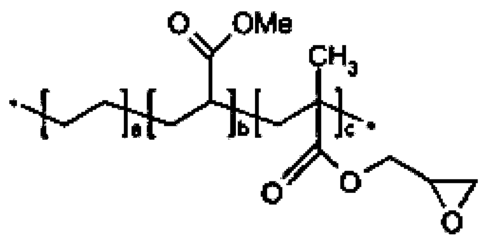

[Formula 7]

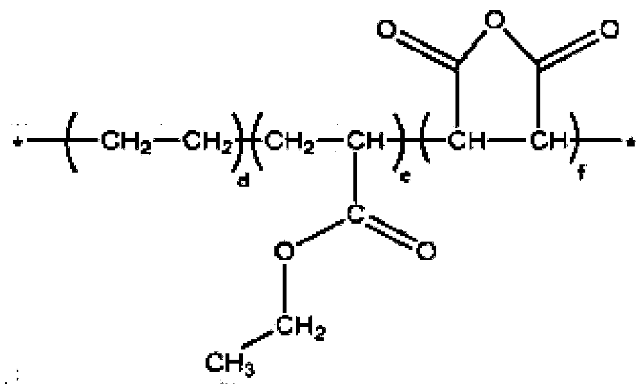

For the poly(ethylene-co-methylacrylate-co-glycidyl methacrylate), in Formula 6, a is an integer of 116 to 268, b is an integer of 12 to 29, and c is an integer of 2 to 7.

In addition, for poly(ethylene-co-ethylacrylate-co-maleic anhydride), in Formula 7, d is an integer of 129 to 300, e is an integer of 8 to 25, and f is an integer of 1 to 3.

Examples of the reactive compatibilizer commercially available include Rotarder AX8840, Rotarder AX8900, and Rotarder AX4720.

According to the present invention, the content of the repeat unit (d) derived from the reactive compatibilizer is not particularly limited, but it may be 0.1 to 10% by weight, 0.5 to 10% by weight, 1 to 5% by weight, or 2 to 4% by weight, based on the total weight of the thermoplastic polyester elastomer resin. As the content of the repeat unit (d) is within the above range, a desired level of melt viscosity can be secured, thereby enhancing the moldability (processability) of the thermoplastic polyester elastomer resin.

As described above, the thermoplastic polyester elastomer resin according to the present invention can have enhanced physical properties by adopting the high molecular weight glycol components (PO3G and EO-PPG) to form a soft segment while controlling the amount of the respective reaction raw materials.

Specifically, the thermoplastic polyester elastomer resin according to the present invention may have a tensile strength of 190 kgf/cm$^2$ or more, 195 kgf/cm$^2$ or more, 200 kgf/cm$^2$ or more, 205 kgf/cm$^2$ or more, 220 kgf/cm$^2$ or more, 230 kgf/cm$^2$ or more, 240 kgf/cm$^2$ or more, or 250 kgf/cm$^2$ or more, when measured in accordance with ASTM D638. More specifically, the tensile strength may be 190 to 350 kgf/cm$^2$, 195 to 345 kgf/cm$^2$, 205 to 340 kgf/cm$^2$, or 230 to 335 kgf/cm$^2$.

The thermoplastic polyester elastomer resin according to the present invention may have an intrinsic viscosity (IV) of 1.0 to 2.4 dl/g, specifically, 1.05 to 2.35 dl/g, 1.08 to 2.3 dl/g, 1.1 to 2 dl/g, 1.2 to 1.9 dl/g, 1.3 to 1.88 dl/g, or 1.4 to 1.85 dl/g.

The thermoplastic polyester elastomer resin according to the present invention may have a Shore D hardness of 20 to 60, specifically, 25 to 55, 28 to 53, 28 to 50, 30 to 48, or 30 to 45.

The thermoplastic polyester elastomer resin according to the present invention has a compression set (compression-elastic recovery) of 30 to 60%, 30 to 59%, 31 to 58%, 31 to 57%, 32 to 56%, 32 to 55%, 33 to 53%, 33 to 50%, 34 to 49%, or 34 to 48%.

The thermoplastic polyester elastomer resin according to the present invention has a resilience (elasticity) of 50 to 75%, 53 to 74%, 55 to 73%, 56 to 72%, 57 to 71%, 58 to 70%, 59 to 70%, 60 to 69%, or 62 to 68%.

The thermoplastic polyester elastomer resin according to the present invention satisfies the following Relationship 3 and/or Relationship 4, whereby it may have excellent mechanical strength, elasticity, and compression-elastic recovery.

[Relationship 3]

$$H / R \leq 0.75$$

[Relationship 4]

$$0.8 \leq H/CS$$

In Relationships 3 and 4, H is the Shore D hardness of the thermoplastic polyester elastomer resin as measured in accordance with ASTM D2240, R is the resilience of the thermoplastic polyester elastomer resin as measured in

accordance with ASTM D2632, and CS is the compression set of the thermoplastic polyester elastomer resin as measured in accordance with ISO 816 Method B.

Specifically, the H/R ratio may be 0.3 to 0.75, 0.32 to 0.73, 0.34 to 0.7, 0.35 to 0.68, 0.38 to 0.65, 0.4 to 0.63, or 0.4 to 0.6.

In addition, the H/CS ratio may be 0.8 to 0.95, 0.8 to 0.93, 0.81 to 0.92, 0.82 to 0.91, 0.83 to 0.9, 0.84 to 0.89, or 0.85 to 0.88.

The thermoplastic polyester elastomer resin according to the present invention has basic physical properties (e.g., thermal resistance, impact resistance, moldability, and the like) and is excellent in mechanical strength, elasticity, and compression-elastic recovery. Thus, it can be used in the production of various products. Specifically, the thermoplastic polyester elastomer resin may be useful in the production of fibers, films, foams (foam-type molded articles), and shoe parts (e.g., shoe midsoles, shoe outsoles, and cushioning materials for shoe insoles).

**Process for preparing a thermoplastic polyester elastomer resin**

The thermoplastic polyester elastomer resin according to the present invention may be prepared through an esterification reaction, or a transesterification reaction, followed by a polycondensation reaction. Specifically, the process for preparing a thermoplastic polyester elastomer resin according to the present invention comprises (1-1) reacting a glycol component; a dicarboxylic acid component; and a high molecular weight glycol component to obtain a reactant; and (1-2) subjecting the reactant to a polycondensation reaction, which will be described in detail as follows.

<u>Step (1-1): Esterification reaction or transesterification reaction</u>

According to the present invention, step (1-1) is a step of charging a glycol component, a dicarboxylic acid component, and a high molecular weight glycol component as reaction raw materials to a reactor (an esterification reactor or a transesterification reactor) and carrying out an esterification reaction or a transesterification reaction to obtain a reactant. In such an event, the glycol component comprises 1,4-butanediol, and the high molecular weight glycol component comprises polytrimethylene ether glycol (PO3G) and ethylene oxide-adducted polypropylene glycol (EO-PPG). The description of these components is the same as above and is therefore omitted. In addition, the description of the dicarboxylic acid component is the same as above and is therefore omitted.

The glycol component, the dicarboxylic acid component, and the high molecular weight glycol component are charged to the reactor at once. Alternatively, the glycol component and the dicarboxylic acid component are first charged, and the temperature is raised. When the temperature of the reactor reaches a certain level, the high molecular weight glycol may be charged thereto. For example, the charging of the high molecular weight glycol may be carried out under a nitrogen atmosphere at a temperature of 180 to 280°C while water or methanol as a by-product is removed.

The esterification reaction or transesterification reaction may be carried out in the presence of a catalyst. That is, when the reaction raw materials are charged to the reactor, a catalyst may be charged together. The catalyst is not particularly limited as long as it is a commonly known catalyst. Specifically, at least one selected from the group consisting of a titanium-based catalyst, a germanium-based catalyst, an antimony-based catalyst, an aluminum-based catalyst, and a tin-based catalyst may be used.

For example, the titanium-based catalyst may comprise at least one selected from the group consisting of tetraethyl titanate, acetyltripropyl titanate, tetrapropyl titanate, tetrabutyl titanate, 2-ethylhexyl titanate, octylene glycol titanate, triethanolamine titanate, acetylacetonate titanate, ethylacetoacetic ester titanate, isostearyl titanate, and titanium dioxide. The germanium-based catalyst may comprise at least one selected from the group consisting of germanium dioxide, germanium tetrachloride, germanium ethylene glycol oxide, and germanium acetate.

The amount of catalyst used (amount added during the reaction) may be appropriately adjusted depending on the reaction conditions and type of catalyst. For example, the catalyst may be charged such that the weight of metal components (e.g., Ti, Ge, Sb, Al, Sn, and the like) contained in the catalyst is 0.0001 to 0.005 part by weight relative to the total weight of the glycol component, dicarboxylic acid component, and high molecular weight glycol component charged to the reactor.

Meanwhile, one or more additives selected from the group consisting of a crystallizing agent, an antioxidant, and a polymerization reaction branching agent may be further added in the esterification reaction or transesterification reaction.

As the crystallizing agent, a crystal nucleating agent, an ultraviolet absorber, a polyolefin resin, a polyamide resin, or the like may be used.

As the antioxidant, at least one selected from the group consisting of hindered phenol-based compounds, phosphite-based compounds, and thioether-based compounds may be used.

As the polymerization reaction branching agent, a polyol having 3 to 6 hydroxyl groups; a polycarboxylic acid having 3 to 4 carboxyl groups, or an anhydride thereof; or a hydroxy acid having a total of 3 to 6 hydroxyl groups and

carboxyl groups may be used. Specifically, the polyol may comprise at least one selected from the group consisting of glycerol, sorbitol, pentaerythritol, 1,1,4,4-tetrakis(hydroxymethyl)cyclohexane, trimethylol propane, and 1,2,6-hexane triol. In addition, the polycarboxylic acid may comprise hemimellitic acid, trimellitic acid, trimespyromellitic acid, 1,1,2,2-ethanetetracarboxylic acid, 1,1,2-ethanetricarboxylic acid, 1,3,5-pentanetricarboxylic acid, and 1,2,3,4-cyclopentanetetracarboxylic acid. For example, as the polymerization reaction branching agent, trimellitic acid, trimellitic anhydride, trimethylol propane, or a combination thereof may be used to control the melt index (MI) of the thermoplastic polyester elastomer resin to a desired level.

The amount of the polymerization reaction branching agent used (amount added during the reaction) is not particularly limited, but its concentration may be 0.00015 to 0.005 equivalent per 100 g of the thermoplastic polyester elastomer resin.

The esterification reaction or transesterification reaction is usually carried out without the addition of a solvent, but an inert solvent such as water and a diol may be added to expedite the removal of volatile components.

The conditions of the esterification reaction or transesterification reaction may be appropriately adjusted depending on the reaction environment and the molecular weight of the desired reactant. Specifically, the pressure for the esterification reaction or transesterification reaction may be 0.01 $kg/cm^2$ or more, 0.05 $kg/cm^2$ or more, or 0.1 $kg/cm^2$ or more, and may be 1.5 $kg/cm^2$ or less, 1 $kg/cm^2$ or less, 0.5 $kg/cm^2$ or less, or 0.3 $kg/cm^2$ or less. The temperature for the esterification reaction or transesterification reaction may be 140°C or higher, 160°C or higher, 180°C or higher, or 200°C or higher, and may be 300°C or lower, 280°C or lower, 270°C or lower, 250°C or lower, or 220°C or lower. The esterification reaction or transesterification reaction may be carried out under a nitrogen atmosphere. For example, the esterification reaction or transesterification reaction may be carried out under a nitrogen atmosphere and the conditions of 0.05 to 1.5 $kg/cm^2$ and 180 to 280°C.

The esterification reaction or transesterification reaction may be carried out in a batch or continuous manner.

The termination point of the esterification reaction or transesterification reaction may be determined by considering the theoretical amount of water or methanol, which is a by-product formed from the dicarboxylic acid component, or when the by-product is no longer discharged.

Step (1-2): Polycondensation reaction

According to the present invention, step (1-2) is a step of subjecting the reactant obtained in step (1-1) to a polycondensation reaction. The conditions under which the polycondensation reaction is carried out may not be particularly limited.

Specifically, the polycondensation reaction may be carried out under a vacuum atmosphere. In addition, the pressure for the polycondensation reaction may be 0.01 to 600 mmHg, 0.05 to 200 mmHg, 0.1 to 100 mmHg, 0.5 to 50 mmHg, or 1 to 10 mmHg. In addition, the temperature for the polycondensation reaction may be 150 to 300°C, 200 to 290°C, 220 to 280°C, or 230 to 260°C. For example, the polycondensation reaction may be carried out under a vacuum atmosphere at a reduced pressure of 0.1 to 10 mmHg and 200 to 260°C for 1 to 24 hours. As the polycondensation reaction is carried out under the above conditions, a thermoplastic polyester elastomer resin having the desired molecular weight and intrinsic viscosity (IV) can be produced while by-products are sufficiently removed.

A thermoplastic polyester elastomer resin comprising the repeat units ((a), (b), and (c)) represented by the above Formulae 1 to 3 can be prepared with high yield through steps (1-1) and (1-2).

Meanwhile, the thermoplastic polyester elastomer resin according to the present invention may be prepared by a procedure of obtaining a first thermoplastic polyester elastomer resin and a second thermoplastic polyester elastomer resin as reaction raw materials, respectively, through an esterification reaction or a transesterification reaction, followed by a polycondensation reaction, and melt-kneading them. Specifically, the process for preparing a thermoplastic polyester elastomer according to the present invention comprises (2-1) reacting a first glycol component comprising 1,4-butanediol; a first dicarboxylic acid component; and a first high molecular weight glycol component comprising polytrimethylene ether glycol to obtaining a first reactant; (2-2) reacting a second glycol component comprising 1,4-butanediol; a second dicarboxylic acid component; and a second high molecular weight glycol component comprising ethylene oxide-adducted polypropylene glycol to obtain a second reactant; and (2-3) melt-kneading the first reactant; the second reactant; and a reactive compatibilizer, which will be described in detail as follows.

Step (2-1): First esterification reaction or first transesterification reaction

According to the present invention, step (2-1) is a step of charging a first glycol component, a first dicarboxylic acid component, and a first high molecular weight glycol component as reaction raw materials to a reactor (an esterification reactor or a transesterification reactor) and carrying out an esterification reaction or a transesterification reaction to obtain a reactant (an intermediate reactant); and carrying out a polycondensation reaction thereof to obtain a first reactant (a first thermoplastic polyester elastomer resin).

The description of the first glycol component and the first dicarboxylic acid component is the same as the description of the glycol component and the dicarboxylic acid component and is therefore omitted. The first high molecular weight glycol component may comprise polytrimethylene ether glycol (PO3G). Specifically, it may be composed of polytrimethylene ether glycol (PO3G) alone.

Meanwhile, the description of the esterification reaction, transesterification reaction, and polycondensation reaction for preparing the first reactant is the same as described above and is therefore omitted.

Step (2-2): Second esterification reaction or second transesterification reaction

According to the present invention, step (2-2) is a step of charging a second glycol component, a second dicarboxylic acid component, and a second high molecular weight glycol component as reaction raw materials to a reactor (an esterification reactor or a transesterification reactor) and carrying out an esterification reaction or a transesterification reaction to obtain a reactant (an intermediate reactant); and carrying out a polycondensation reaction thereof to obtain a second reactant (a second thermoplastic polyester elastomer resin).

The description of the second glycol component and the second dicarboxylic acid component is the same as the description of the glycol component and the dicarboxylic acid component and is therefore omitted. The second high molecular weight glycol component may comprise ethylene oxide-adducted polypropylene glycol (EO-PPG). Specifically, it may be composed of ethylene oxide-adducted polypropylene glycol (EO-PPG) alone.

Meanwhile, the description of the esterification reaction, transesterification reaction, and polycondensation reaction for preparing the second reactant is the same as described above and is therefore omitted.

Step (2-3): Melt-kneading

According to the present invention, step (2-3) is a step of melting-kneading the first reactant obtained in step (2-1) and the second reactant obtained in step (2-2). In the melt-kneading of step (2-3), a reactive compatibilizer that can achieve chemical crosslinking while maximizing the dispersibility of the first reactant and second reactant is added. As a result, a thermoplastic polyester elastomer resin with excellent mechanical strength, elasticity, and compression-elastic recovery, while securing basic physical properties, can be prepared. In particular, as the reactive compatibilizer is adopted, dispersion and combination of the first reactant and the second reactant are achieved in a state in which micro-phase separation of the soft segment having a repeat unit (repeat (c) of Formula 3) derived from ethylene oxide-adducted polypropylene glycol (EO-PPG), which has an energy repulsive elastic effect, and the soft segment having a repeat unit (repeat unit (b) of Formula 2) derived from polytrimethylene ether glycol (PO3G), which determines mechanical strength, does not take place. Thus, a thermoplastic polyester elastomer resin with excellent elasticity and compression-elastic recovery can be prepared. The description of the reactive compatibilizer is as described above and is therefore omitted.

Meanwhile, the melt-kneading may be carried out under heating and/or pressurizing conditions using a single-screw extruder, a twin-screw extruder, a mixing roll, a Banbury mixer, a batch kneader, a molding machine, or the like.

For the melt-kneading, the first reactant and the second reactant may be subjected to a preliminary mixing procedure. Specifically, the preliminary mixing procedure may be carried out by charging the first reactant and the second reactant to various mixers, such as a V-type blender, a ribbon blender, a Henschel mixer, a rocking mixer, a turbula mixer, a planetary mixer, a Banbury mixer, a mill blender, a mixing roll, and a tumbler, and performing preliminary mixing in a solid form. The mixing time in the solid form may vary depending on the type of mixer, but the mixing time may be adjusted such that the standard deviation of the target mixing ratio is within 1%, and at most 2%, when sampling is performed at five locations randomly after mixing.

In the preliminary mixing procedure, commonly known additives (e.g., colorants, fillers, sunscreens, thermal stabilizers, and the like) may be added as needed. Here, the first reactant and the second reactant may be directly fed to a single-screw extruder, a twin-screw extruder, a mixing roll, a Banbury mixer, a batch kneader, a molding machine, or the like for melt-kneading, without going through the preliminary mixing procedure. In addition, a thermoplastic polyester elastomer resin may be prepared by preliminary mixing some of the raw material components and then melt-kneading them to obtain a reactant, which is used as a masterbatch, mixing the remaining raw material components with the masterbatch, and then melt-kneading them again.

Meanwhile, the mixing ratio of the first reactant and the second reactant in the melt-kneading is not particularly limited, but it may be a weight ratio of 40:60 to 99:1, 45:55 to 99:1, 50:50 to 98:2, 55:45 to 98:2, 60:40 to 95:5, 60:40 to 90:10, 65:35 to 90:10, 70:30 to 85:15, or 75:25 to 85:15, in light of the desired physical properties of the thermoplastic polyester elastomer resin.

Specifically, the melt-kneading may be carried out in a single-screw extruder or a twin-screw extruder. The temperature at which melt-kneading is carried out through the extruder(s) (e.g., the barrel temperature of the extruder) is not particularly limited and may be determined in light of miscibility, ease of extrusion, extrusion reaction efficiency, and the like. Specifically, the melt-kneading may be carried out at a temperature higher than the melting temperature ($T_m$) of the

desired thermoplastic polyester elastomer resin by 20 to 30°C. For example, the temperature at which melt-kneading is carried out may be 170 to 230°C, 180 to 225°C, 190 to 220°C, 195 to 215°C, or 200 to 210°C. Meanwhile, the extrusion speed (screw rotation speed) of the extruder(s) is not particularly limited. Specifically, it may be 150 to 230 rpm, 160 to 225 rpm, 170 to 220 rpm, 180 to 210 rpm, 190 to 205 rpm, or 195 to 200 rpm. As melt-kneading is carried out under the above conditions, sufficient melt-kneading and reaction extrusion can be possible with an appropriate throughput per unit time. If the above conditions are not satisfied, the thermoplastic polyester elastomer resin may be thermally decomposed, or its melting characteristics may be poor, which may deteriorate the melt-kneading and reaction extrusion characteristics of the compatibilizer.

As melt-kneading is carried out with the reactive compatibilizer, the hydroxyl group (-OH) or carboxyl group (-COOH) present in the first reactant and the second reactant, respectively, is reacted with the glycidyl group or maleic anhydride structure in the reactive compatibilizer to form an ether bond or an ester bond.

Specifically, a thermoplastic polyester elastomer resin comprising the repeat units ((a), (b), and (c)) represented by the above Formulae 1 to 3, along with the repeat unit (d), can be prepared with high yield through steps (2-1) and (2-3).

## Composition and article

The composition according to the present invention comprises the thermoplastic polyester elastomer resin described above. Specifically, since the composition according to the present invention comprises a thermoplastic polyester elastomer resin with excellent mechanical strength, elasticity, and compression-elastic recovery, it can be used for the production of various products.

The composition according to the present invention may further comprise commonly known solvents and additives as needed.

Meanwhile, the article according to the present invention comprises the thermoplastic polyester elastomer resin described above. The article according to the present invention is not particularly limited, but it may be a fiber, a foam (a molded article in the form of foam), or a shoe part.

The fiber may be a single-component fiber and/or a multi-component fiber (e.g., a bi-component fiber). The fiber may be made into woven fabrics, knitted fabrics, or nonwoven fabrics.

The foam (molded article in the form of foam) may be manufactured through a process of physically or chemically foaming the thermoplastic polyester elastomer resin described above in a mold or autoclave. The density of the foam is not particularly limited, but it may be 0.15 to 0.45 g/$cm^3$. This foam has high elasticity and energy return characteristics by virtue of the thermoplastic polyester elastomer resin described above; thus, it can be applied to straps, bogie gear, high elasticity shock absorbing parts, and the like.

The shoe part is obtained by putting the thermoplastic polyester elastomer resin described above into a mold and molding it. Specifically, it may be a shoe midsole, a shoe outsole, or a cushioning material for a shoe insole.

## Mode for the Invention

Hereinafter, the present invention will be described in more detail with reference to embodiments. However, these examples are provided only for illustration purposes, and the present invention is not limited thereto.

### [Example 1]

Step (1-1): Preparation of a reactant through a transesterification reaction

A transesterification reactor having a volume of 1.2 $m^3$ and equipped with a column and a condenser that can be cooled by water was charged with 24.2 kg of 1,4-butanediol (BD) as a glycol component; 43.9 kg of polytrimethylene ether glycol (PO3G) and 13.2 kg of ethylene oxide-adducted polypropylene glycol (EO-PPG) as high molecular weight glycol components; 40.0 kg of dimethyl terephthalate (DMT) as a dicarboxylic acid component; 0.06 kg of trimellitic anhydride (TMA) as a polymerization reaction branching agent; 0.25 kg of tetrabutyl titanate (TBT) as a reaction catalyst; 0.15 kg of I1098 and 0.15 kg of 11019 as primary antioxidants; and 0.1 kg of 1168 as a secondary antioxidant. Subsequently, the reactor was evacuated, and nitrogen was flowed to backcharge the pressure in the reactor to 1 kg/$cm^2$ to create an inert atmosphere. Thereafter, the temperature was raised while the charged raw materials were stirred under a nitrogen atmosphere. When the temperature in the reactor reached about 200°C, a transesterification reaction was carried out for 3 hours while the temperature was maintained at 200°C. In such an event, methanol as a by-product was discharged through the column and condenser during the transesterification reaction, and the transesterification reaction was continued until the discharge of methanol stopped. Thereafter, upon completion of the transesterification reaction, nitrogen in the pressurized reactor was released to the outside to lower the pressure in the reactor to normal pressure, and the reactant (resulting material) in the reactor was then transferred to a polycondensation reactor having a volume of 0.75 $m^3$ capable of

a reaction under vacuum.

Step (1-2): Preparation of a thermoplastic polyester elastomer resin through a polycondensation reaction

The pressure of the polycondensation reactor was reduced from normal pressure to 5 Torr (absolute pressure: 5 mmHg) over 30 minutes. At the same time, the temperature of the polycondensation reactor was raised to 245°C over 1 hour, and a polycondensation reaction was then carried out while the pressure of the polycondensation reactor was maintained at 1 Torr (absolute pressure: 1 mmHg) or less. In such an event, at the beginning of the polycondensation reaction, the stirring speed might be set high. As the polycondensation reaction proceeded, the glycol component produced as a by-product was discharged through the column and condenser. When the stirring power was weakened due to the increase in the viscosity of the reactant or the temperature of the reactant was elevated above the set temperature, the stirring speed was appropriately adjusted. Thereafter, the polycondensation reaction was carried out until the intrinsic viscosity (IV) of the reactant (melt) in the reactor reached 1.85 dl/g. When the intrinsic viscosity (IV) of the reactant reached the desired level, the reactant was discharged to the outside of the reactor and formed into strands. Subsequently, they were solidified with a cooling liquid and then pelletized such that the average weight of 100 pellets was about 2.5 to 4.0 g, thereby obtaining a thermoplastic polyester elastomer resin.

**[Examples 2 to 6]**

Each thermoplastic polyester elastomer resin was obtained through the same procedure as in Example 1, except that the content (unit: kg) of each raw material was changed as shown in Table 1 below.

**[Comparative Examples 1 to 6]**

Each thermoplastic polyester elastomer resin was obtained through the same procedure as in Example 1, except that the content (unit: kg) of each raw material was changed as shown in Table 2 below.

[Table 1]

| Raw material | Ex. 1 | Ex. 2 | Ex. 3 | Ex. 4 | Ex. 5 | Ex. 6 |
|---|---|---|---|---|---|---|
| DMT | 40.0 | 32.2 | 44.0 | 40.1 | 56.1 | 37.1 |
| 1,4-BD | 24.2 | 18.2 | 27.4 | 24.1 | 36.0 | 21.9 |
| PO3G | 43.9 | 43.7 | 29.0 | 55.3 | 11.3 | 46.5 |
| PO3G Mn | 2,000 | 2,000 | 2,000 | 2,000 | 1,000 | 2,000 |
| EO-PPG | 13.2 | 22.5 | 23.2 | 1.7 | 27.1 | 14.0 |
| EO-PPG Mn | 2,400 | 2,400 | 2,400 | 2,400 | 2,400 | 2,400 |
| TMA | 0.06 | 0.05 | 0.07 | 0.06 | 0.09 | 0.06 |
| 11098 | 0.15 | 0.15 | 0.15 | 0.15 | 0.15 | 0.15 |
| 11019 | 0.15 | 0.15 | 0.15 | 0.15 | 0.15 | 0.15 |
| 1168 | 0.1 | 0.1 | 0.1 | 0.1 | 0.1 | 0.1 |
| TBT | 0.25 | 0.25 | 0.25 | 0.25 | 0.25 | 0.25 |
| DMT: dimethyl terephthalate<br>1,4-BD: 1,4-butanediol<br>PO3G: polytrimethylene ether glycol<br>EO-PPG: ethylene oxide-adducted polypropylene glycol<br>TMA: trimellitic anhydride<br>TBT: tetrabutyl titanate | | | | | | |

[Table 2]

| Raw material | C. Ex. 1 | C. Ex. 2 | C. Ex. 3 | C. Ex. 4 | C. Ex. 5 | C. Ex. 6 |
|---|---|---|---|---|---|---|
| DMT | 29.4 | 32.3 | 40.0 | 60.9 | 35.8 | 53.1 |

(continued)

| Raw material | C. Ex. 1 | C. Ex. 2 | C. Ex. 3 | C. Ex. 4 | C. Ex. 5 | C. Ex. 6 |
|---|---|---|---|---|---|---|
| 1,4-BD | 15.8 | 18.1 | 24.1 | 37.9 | 21.3 | 34.5 |
| PO3G | - | 66.2 | 57.0 | 33.8 | - | - |
| PO3G Mn | - | 2,000 | 2,000 | 1,000 | - | - |
| PTMG | 69.7 | - | - | - | - | - |
| PTMG Mn | 2,000 | - | - | - | - | - |
| EO-PPG | - | - | - | - | 61.7 | 41.3 |
| EO-PPG Mn | - | - | - | - | 2,400 | 2,400 |
| TMA | 0.05 | 0.11 | 0.12 | 0.11 | - | - |
| TMP | - | - | - | - | 0.15 | 0.14 |
| 11098 | 0.15 | 0.15 | 0.15 | 0.15 | 0.15 | 0.15 |
| 11019 | 0.15 | 0.15 | 0.15 | 0.15 | 0.15 | 0.15 |
| 1168 | 0.10 | 0.10 | 0.10 | 0.10 | 0.10 | 0.10 |
| TBT | 0.25 | 0.25 | 0.25 | 0.25 | 0.25 | 0.25 |
| DMT: dimethyl terephthalate<br>1,4-BD: 1,4-butanediol<br>PO3G: polytrimethylene ether glycol<br>EO-PPG: ethylene oxide-adducted polypropylene glycol<br>PTMG: polytetramethylene ether glycol<br>TMA: trimellitic anhydride<br>TMP: trimethylol propane<br>TBT: tetrabutyl titanate | | | | | | |

The composition and physical properties of the thermoplastic polyester elastomer resins obtained in Examples 1 to 6 and Comparative Examples 1 to 6 were each evaluated as follows. The results are shown in Tables 3 and 4 below.

[Test Example 1] Content of a hard segment (Formula 1) and a soft segment (Formulae 2 and 3)

Each thermoplastic polyester elastomer resin was dissolved in a $CDCl_3$ solvent at a concentration of 3 mg/ml, whose $^1$H-NMR spectrum was obtained at 25°C using nuclear magnetic resonance equipment (JEOL, 600 MHz FT-NMR). The spectrum was analyzed to calculate the contents (% by weight) of BD, PO3G, and EO-PPG based on the total number of moles of residues derived from the entire glycols (BD, PO3G, EO-PPG, and the like), which was used to confirm the content of the hard segment and soft segment.

[Test Example 2] Shore D hardness (H)

The hardness of each thermoplastic polyester elastomer resin was measured in accordance with ASTM D2240 (Durometer Type D). Specifically, thermoplastic polyester elastomer resin pellets were injection molded using an injection molding machine (ENGEL, Victory 80) to produce a test specimen of 100 mm in width, 100 mm in length, and 2 mm in thickness, three of which were stacked to obtain a test specimen with a thickness of 6 mm. Then, the hardness was measured.

**[Test Example 3] Intrinsic viscosity (IV)**

Each thermoplastic polyester elastomer resin was dissolved at a concentration of 0.12% in orthochlorophenol (OCP) at 150°C to obtain a solution, and an Ubbelohde viscometer was used in a constant temperature bath at 35°C to measure the intrinsic viscosity of the thermoplastic polyester elastomer resin. Specifically, the temperature of the viscosity tube was maintained at 35°C, and the time (efflux time) required for the solvent to pass between specific internal sections of the viscosity tube and the time required for the solution to pass to obtain specific viscosity, which was used to calculate

intrinsic viscosity.

**[Test Example 4] Melt index (MI)**

In accordance with ASTM D1238, each thermoplastic polyester elastomer resin was kept at 220°C under a load of 2.16 kg for 4 minutes, and the amount of discharged material per hour was then averaged three times to calculate the melt index.

**[Test Example 5] Melting point ($T_m$)**

Each thermoplastic polyester elastomer resin was dried under a reduced pressure at 50°C for 15 hours, melted, and quenched, which was then heated at 10°C/minute in a differential scanning calorimeter (DSC, TA Instruments) for scanning. Thereafter, the highest point of the endothermic peak due to resin melting was taken as the melting point ($T_m$).

**[Test Example 6] Tensile strength**

The tensile strength of each thermoplastic polyester elastomer resin was measured in accordance with ASTM D638. Specifically, thermoplastic polyester elastomer resin pellets were injection molded using an injection molding machine (ENGEL, Victory 80) to produce a test specimen of 120 mm in width, 120 mm in length, and 2 mm in thickness, which was punched to obtain a tensile test specimen of ASTM Type I (dumbbell-shaped bar). Next, the tensile strength of the tensile test specimen was measured using a tensile tester (Zwick Roell, Z010) at a speed of 50 mm/minute.

**[Test Example 7] Compression set (CS)**

The compression set of each thermoplastic polyester elastomer resin was measured in accordance with ISO 816 Method B. Specifically, thermoplastic polyester elastomer resin pellets were injection molded using a compression molding machine (WithLab, WL1700) to produce a test specimen of 29 mm in diameter and 12.5 mm in thickness, which was compressed by pressing at 70°C for 22 hours at a compression ratio of 25% thickness. Thereafter, the remaining strain was obtained when the compressing force was removed, which was used to calculate the compression set.

**[Test Example 8] Resilience (R)**

The resilience of each thermoplastic polyester elastomer resin was measured in accordance with ASTM D2632. Specifically, thermoplastic polyester elastomer resin pellets were injection molded using a compression molding machine (WithLab, WL1700) to produce a test specimen of 29 mm in diameter and 12.5 mm in thickness. Next, a weight of 28 g was dropped on the test specimen, and the rebound height was obtained, which was used to calculate the resilience.

[Table 3]

| | Ex. 1 | Ex. 2 | Ex. 3 | Ex. 4 | Ex. 5 | Ex. 6 |
|---|---|---|---|---|---|---|
| Repeat unit (b) of Formula 2 % by weight (y) | 46.75 | 46.58 | 30.90 | 58.89 | 12.75 | 49.56 |
| Repeat unit (c) of Formula 3 % by weight (z) | 13.88 | 23.71 | 24.46 | 1.79 | 28.54 | 14.72 |
| Repeat unit (a) of Formula 1 % by weight (x) | 39.37 | 29.71 | 44.64 | 39.32 | 58.71 | 35.72 |
| y/z (weight ratio of soft segment) | 3.37 | 1.96 | 1.26 | 32.90 | 0.45 | 3.37 |
| (y + z)/x (weight ratio of soft segment/hard segment) | 1.54 | 2.37 | 1.24 | 1.54 | 0.70 | 1.80 |
| H (Shore D) | 40 | 30 | 45 | 40 | 48 | 38 |
| IV (dl/g) | 1.85 | 1.70 | 1.51 | 1.75 | 1.21 | 1.71 |
| MI (g/10 min., 220°C) | 17 | 20 | 12 | 15 | 14 | 17 |
| Tm (°C) | 201 | 196 | 218 | 194 | 217 | 200 |
| Tensile strength (kgf/cm$^2$) | 260 | 230 | 300 | 260 | 340 | 230 |
| Compression set (CS, %) | 49 | 34 | 55 | 50 | 56 | 45 |
| Resilience (R, %) | 65 | 71 | 61 | 57 | 64 | 65 |
| H/CS | 0.82 | 0.88 | 0.82 | 0.8 | 0.86 | 0.84 |

(continued)

| | Ex. 1 | Ex. 2 | Ex. 3 | Ex. 4 | Ex. 5 | Ex. 6 |
|---|---|---|---|---|---|---|
| H/R | 0.62 | 0.42 | 0.74 | 0.7 | 0.75 | 0.58 |

[Table 4]

| | C. Ex. 1 | C. Ex. 2 | C. Ex. 3 | C. Ex. 4 | C. Ex. 5 | C. Ex. 6 |
|---|---|---|---|---|---|---|
| Repeat unit (b) of Formula 2 % by weight (y) | 74.3 (repeat unit derived from PTMG) | 70.5 | 60.8 | 38.2 | - | - |
| Repeat unit (c) of Formula 3 % by weight (z) | - | - | - | - | 65.0 | 43.5 |
| Repeat unit (a) of Formula 1 % by weight (x) | 25.7 | 29.5 | 39.2 | 61.8 | 35.0 | 56.5 |
| y/z (weight ratio of soft segment) | - | - | - | - | - | - |
| (y + z)/x (weight ratio of soft segment/hard segment) | 2.89 | 2.39 | 1.55 | 0.62 | 1.86 | 0.77 |
| H (Shore D) | 30 | 30 | 40 | 55 | 28 | 47 |
| IV (dl/g) | 1.87 | 1.85 | 1.79 | 1.31 | 1.38 | 1.08 |
| MI (g/10 min., 220°C) | 15 | 17 | 11 | 13 | 24 | 11 |
| Tm (°C) | 180 | 174 | 195 | 203 | 194 | 216 |
| Tensile strength (kgf/cm$^2$) | 270 | 220 | 260 | 380 | 120 | 180 |
| Compression set (CS, %) | 47 | 44 | 60 | 64 | 53 | 55 |
| Resilience (R, %) | 65 | 70 | 51 | 50 | 55 | 50 |
| H/CS | 0.64 | 0.68 | 0.67 | 0.86 | 0.53 | 0.85 |
| H/R | 0.46 | 0.43 | 0.78 | 1.10 | 0.51 | 0.94 |

Referring to Tables 3 and 4 above, the thermoplastic polyester elastomer resins of Examples 1 to 6, which comprised a soft segment comprising repeat units (Formulae 2 and 3) derived from PO3G and EO-PPG and a hard segment (Formula 1), were excellent in mechanical strength, elasticity (resilience), and compression set, which is elastic recovery after long-term deformation.

In contrast, the thermoplastic polyester elastomer resin of Comparative Example 1, in which PTMG was used alone, and the thermoplastic polyester elastomer resins of Comparative Examples 2 to 4, in which PO3G was used alone, were poor in elasticity or elastic recovery despite good mechanical strength. In addition, the thermoplastic polyester elastomer resins of Comparative Examples 5 and 6, in which EO-PPG was used alone, were significantly poor in mechanical strength.

## Claims

1. A thermoplastic polyester elastomer resin, which comprises a repeat unit (a) represented by the following Formula 1; a repeat unit (b) represented by the following Formula 2; and a repeat unit (c) represented by the following Formula 3:

[Formula 1]

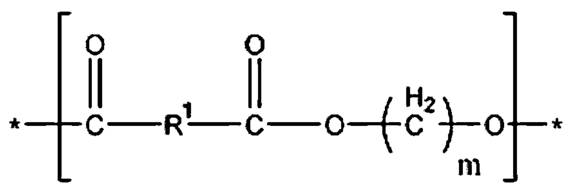

[Formula 2]

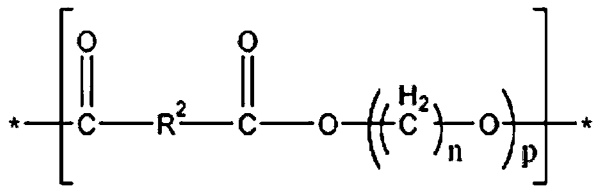

[Formula 3]

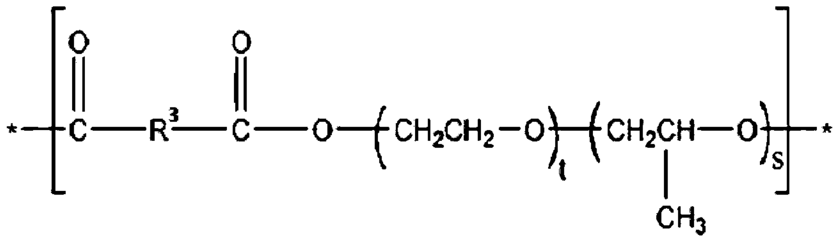

in Formulae 1 to 3, $R^1$ to $R^3$ are each independently a $C_1$ to $C_{12}$ linear, branched, or cyclic divalent aliphatic hydrocarbon group; or a $C_6$ to $C_{12}$ divalent aromatic hydrocarbon group, m is an integer of 2 to 6, n is an integer of 2 to 3, p is an integer of 10 to 30, t is an integer of 1 to 30, and s is an integer of 1 to 40.

**2.** The thermoplastic polyester elastomer resin of claim 1, which satisfies the following Relationship 1:

[Relationship 1]

$$0.5 \leq (y + z)/x \leq 3.0$$

in Relationship 1, x is the weight accounted for by the repeat unit (a) represented by Formula 1 in the thermoplastic polyester elastomer resin, y is the weight accounted for by the repeat unit (b) represented by Formula 2 in the thermoplastic polyester elastomer resin, and z is the weight accounted for by the repeat unit (c) represented by Formula 3 in the thermoplastic polyester elastomer resin.

**3.** The thermoplastic polyester elastomer resin of claim 1, which satisfies the following Relationship 2:

[Relationship 2]

$$0.3 \leq y/z \leq 35$$

in Relationship 2, y is the weight accounted for by the repeat unit (b) represented by Formula 2 in the thermoplastic polyester elastomer resin, and z is the weight accounted for by the repeat unit (c) represented by Formula 3 in the thermoplastic polyester elastomer resin.

**4.** The thermoplastic polyester elastomer resin of claim 1, which has a tensile strength of 190 $kgf/cm^2$ or more when measured in accordance with ASTM D638.

**5.** The thermoplastic polyester elastomer resin of claim 1, which satisfies the following Relationship 3:

[Relationship 3]

$$H / R \leq 0.75$$

in Relationship 3, H is the Shore D hardness of the thermoplastic polyester elastomer resin as measured in accordance with ASTM D2240, and R is the resilience of the thermoplastic polyester elastomer resin as measured

in accordance with ASTM D2632.

**6.** The thermoplastic polyester elastomer resin of claim 1, which satisfies the following Relationship 4:

[Relationship 4]

$$0.8 \leq H/CS$$

in Relationship 4, H is the Shore D hardness of the thermoplastic polyester elastomer resin as measured in accordance with ASTM D2240, and CS is the compression set of the thermoplastic polyester elastomer resin as measured in accordance with ISO 816 Method B.

**7.** The thermoplastic polyester elastomer resin of claim 1, which has an intrinsic viscosity of 1.0 to 2.4 dl/g.

**8.** The thermoplastic polyester elastomer resin of claim 1, wherein the repeat unit (a) represented by Formula 1 is derived from a reaction of a glycol component comprising 1,4-butanediol; and a dicarboxylic acid component,

the repeat unit (b) represented by Formula 2 is derived from a reaction of a dicarboxylic acid component; and a high molecular weight glycol component comprising polytrimethylene ether glycol, and
the repeat unit (c) represented by Formula 3 is derived from a reaction of a dicarboxylic acid component; and a high molecular weight glycol component comprising ethylene oxide-adducted polypropylene glycol.

**9.** The thermoplastic polyester elastomer resin of claim 8, wherein the amount of 1,4-butanediol used is 75% by mole or more based on the total mole percent of the glycol component, and
the amount of polytrimethylene ether glycol used is 50% by mole or more based on the total mole percent of the high molecular weight glycol component.

**10.** The thermoplastic polyester elastomer resin of claim 8, wherein the dicarboxylic acid component comprises at least one selected from the group consisting of terephthalic acid and dimethyl terephthalate, and
the amount of at least one selected from the group consisting of terephthalic acid and dimethyl terephthalate used is 50% by mole or more based on the total mole percent of the dicarboxylic acid component.

**11.** The thermoplastic polyester elastomer resin of claim 8, wherein the number average molecular weight of the high molecular weight glycol component comprising polytrimethylene ether glycol and the number average molecular weight of the high molecular weight glycol component comprising ethylene oxide-adducted polypropylene glycol are each 400 to 5,000 g/mole.

**12.** The thermoplastic polyester elastomer resin of claim 8, wherein the number average molecular weight of the high molecular weight glycol component comprising polytrimethylene ether glycol and the number average molecular weight of the high molecular weight glycol component comprising ethylene oxide-adducted polypropylene glycol are each 1,000 to 3,000 g/mole.

**13.** A process for preparing a thermoplastic polyester elastomer resin, which comprises:

(1-1) reacting a glycol component; a dicarboxylic acid component; and a high molecular weight glycol component to obtain a reactant; and
(1-2) subjecting the reactant to a polycondensation reaction,
wherein the thermoplastic polyester elastomer resin comprises a repeat unit (a) represented by the following Formula 1; a repeat unit (b) represented by the following Formula 2; and a repeat unit (c) represented by the following Formula 3:

[Formula 1]

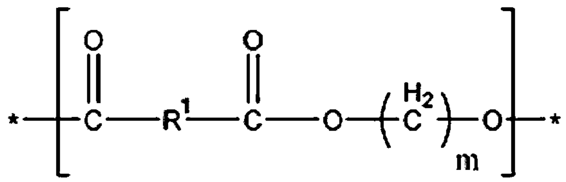

[Formula 2]

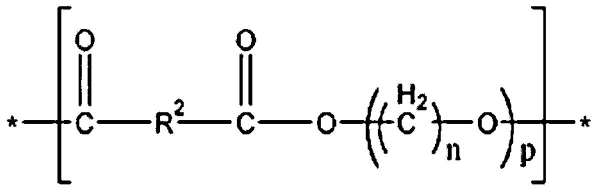

[Formula 3]

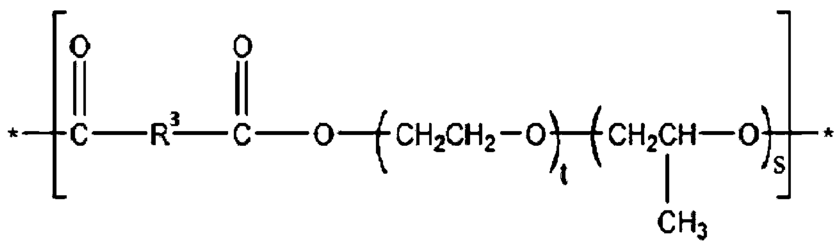

in Formulae 1 to 3, $R^1$ to $R^3$ are each independently a $C_1$ to $C_{12}$ linear, branched, or cyclic divalent aliphatic hydrocarbon group; or a $C_6$ to $C_{12}$ divalent aromatic hydrocarbon group, m is an integer of 2 to 6, n is an integer of 2 to 3, p is an integer of 10 to 30, t is an integer of 1 to 30, and s is an integer of 1 to 40.

**14.** A composition, which comprises the thermoplastic polyester elastomer resin of any one of claims 1 to 12.

**15.** An article, which comprises the thermoplastic polyester elastomer resin of any one of claims 1 to 12.

**16.** The article of claim 15, wherein the article is a fiber, a foam, or a shoe part.

**INTERNATIONAL SEARCH REPORT**

International application No.
**PCT/KR2024/095855**

**A. CLASSIFICATION OF SUBJECT MATTER**

**C08G 63/672**(2006.01)i; **C08G 63/78**(2006.01)i

According to International Patent Classification (IPC) or to both national classification and IPC

**B. FIELDS SEARCHED**

Minimum documentation searched (classification system followed by classification symbols)

C08G 63/672(2006.01); B32B 27/36(2006.01); C08G 18/42(2006.01); C08G 63/66(2006.01); C08K 3/32(2006.01); C08K 5/13(2006.01); C08K 5/56(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 열가소성 엘라스토머(thermoplastic elastomer), 폴리에스테르 엘라스토머(polyester elastomer), 부탄디올(butanediol, BD), 폴리트리메틸렌 에테르 글리콜(polytrimethylene ether glycol, PO3G), 에틸렌 옥사이드 부가 폴리프로필렌 글리콜(polypropylene glycol with ethylene oxide added, EO-PPG)

**C. DOCUMENTS CONSIDERED TO BE RELEVANT**

| Category* | Citation of document, with indication, where appropriate, of the relevant passages | Relevant to claim No. |
|---|---|---|
| A | JP 2990437 B2 (DU PONT TORAY CO., LTD.) 13 December 1999 (1999-12-13) See claim 1; pages 3, 6 and 7; and example 1. | 1-16 |
| A | KR 10-0933411 B1 (E.I. DU PONT DE NEMOURS AND COMPANY) 22 December 2009 (2009-12-22) See claims 7 and 13; and paragraph [0124]. | 1-16 |
| A | JP 02-283759 A (DU PONT TORAY CO., LTD.) 21 November 1990 (1990-11-21) See claim 1. | 1-16 |
| A | US 7422795 B2 (SUNKARA, H. B. et al.) 09 September 2008 (2008-09-09) See claim 3. | 1-16 |
| A | US 2011-0021697 A1 (SUNKARA, H. B.) 27 January 2011 (2011-01-27) See paragraph [0131]. | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 September 2024** | **04 September 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/095855**

| Patent document cited in search report | Publication date (day/month/year) | Patent family member(s) | Publication date (day/month/year) |
|---|---|---|---|
| JP 2990437 B2 | 13 December 1999 | JP 02-269118 A | 02 November 1990 |
| KR 10-0933411 B1 | 22 December 2009 | AT 321804 T | 15 April 2006 |
| | | AT E321804 T1 | 15 April 2006 |
| | | AU 2002-335133 A1 | 12 May 2003 |
| | | CA 2425646 A1 | 30 April 2003 |
| | | CA 2425646 C | 21 February 2012 |
| | | CN 1260268 C | 21 June 2006 |
| | | CN 1481406 A | 10 March 2004 |
| | | DE 60210340 T2 | 14 December 2006 |
| | | EP 1448657 A2 | 25 August 2004 |
| | | EP 1448657 A4 | 08 December 2004 |
| | | EP 1448657 B1 | 29 March 2006 |
| | | JP 2005-507967 A | 24 March 2005 |
| | | JP 4255834 B2 | 15 April 2009 |
| | | KR 10-2004-0062421 A | 07 July 2004 |
| | | MX PA03005768 A | 26 February 2004 |
| | | US 6562457 B1 | 13 May 2003 |
| | | WO 03-037978 A2 | 08 May 2003 |
| | | WO 03-037978 A3 | 10 July 2003 |
| JP 02-283759 A | 21 November 1990 | JP 2665558 B2 | 22 October 1997 |
| US 7422795 B2 | 09 September 2008 | CA 2571511 A1 | 26 January 2006 |
| | | CN 101006120 A | 25 July 2007 |
| | | EP 1765919 A1 | 28 March 2007 |
| | | JP 2008-503644 A | 07 February 2008 |
| | | KR 10-2007-0028557 A | 12 March 2007 |
| | | TW 200617071 A | 01 June 2006 |
| | | TW I372770 B | 21 September 2012 |
| | | US 2005-0282966 A1 | 22 December 2005 |
| | | US 2008-0255300 A1 | 16 October 2008 |
| | | WO 2006-009758 A1 | 26 January 2006 |
| US 2011-0021697 A1 | 27 January 2011 | AT 446145 T | 15 November 2009 |
| | | AT 448882 T | 15 December 2009 |
| | | AT E446145 T1 | 15 November 2009 |
| | | AT E448882 T1 | 15 December 2009 |
| | | AU 2005-216696 A1 | 09 September 2005 |
| | | AU 2005-216696 B2 | 07 July 2011 |
| | | AU 2005-216699 A1 | 09 September 2005 |
| | | AU 2005-216699 B2 | 14 July 2011 |
| | | BR PI0716362 A2 | 17 September 2013 |
| | | CA 2556649 A1 | 09 September 2005 |
| | | CA 2556649 C | 10 July 2012 |
| | | CA 2556673 A1 | 09 September 2005 |
| | | CA 2556673 C | 05 February 2013 |
| | | CA 2662834 A1 | 08 May 2008 |
| | | CN 101535371 A | 16 September 2009 |
| | | CN 101535371 B | 29 August 2012 |
| | | DE 112007002474 T5 | 17 September 2009 |
| | | DK 1718413 T3 | 08 March 2010 |
| | | DK 1720660 T3 | 22 March 2010 |
| | | EP 1718413 A1 | 08 November 2006 |

Form PCT/ISA/210 (patent family annex) (July 2022)

**INTERNATIONAL SEARCH REPORT**
**Information on patent family members**

International application No.
**PCT/KR2024/095855**

| Patent document cited in search report | Publication date (day/month/year) | Patent family member(s) | Publication date (day/month/year) |
|---|---|---|---|
| | | EP 1718413 B1 | 21 October 2009 |
| | | EP 1720660 A1 | 15 November 2006 |
| | | EP 1720660 B1 | 18 November 2009 |
| | | ES 2335290 T3 | 24 March 2010 |
| | | ES 2336579 T3 | 14 April 2010 |
| | | JP 2010-508394 A | 18 March 2010 |
| | | KR 10-2009-0082362 A | 30 July 2009 |
| | | US 10507480 B2 | 17 December 2019 |
| | | US 2007-0210186 A1 | 13 September 2007 |
| | | US 2008-0103217 A1 | 01 May 2008 |
| | | US 2008-0230632 A1 | 25 September 2008 |
| | | US 2015-0202639 A1 | 23 July 2015 |
| | | US 2015-0202640 A1 | 23 July 2015 |
| | | US 9004375 B2 | 14 April 2015 |
| | | US 9010663 B2 | 21 April 2015 |
| | | WO 2005-082545 A1 | 09 September 2005 |
| | | WO 2005-082546 A1 | 09 September 2005 |
| | | WO 2008-054777 A2 | 08 May 2008 |
| | | WO 2008-054777 A3 | 19 June 2008 |

Form PCT/ISA/210 (patent family annex) (July 2022)